# DEMANDE DE BREVET EUROPEEN

(11) **EP 1 388 728 A2**
(43) Date de publication de la demande: **11.02.2004**
(21) Numéro de dépôt: 03291969.8
(22) Date de dépôt: 06.08.2003
(51) Int. Cl.: G01D 4/00

(54) **Dispositif et procédé d'acquisition d'une mesure réalisée par un compteur**

(30) Priorité: 07.08.2002 FR 0210069; 22.05.2003 FR 0306177
(71) Demandeur: Fludia, 92380 Garches (FR)
(72) Inventeur: Bons, Marc, 92380 Garches (FR)
(74) Mandataire: Breesé, Pierre

(57) **Abrégé**

La présente invention se rapporte à un dispositif d'acquisition de mesures réalisées par un compteur (C3) disposant d'un indicateur de données d'information, par exemple relatives à la consommation mesurée par le compteur (C3), comportant un boîtier, un moyen de détection, un moyen de stockage de données, une unité de traitement, caractérisé en ce qu'il comprend au moins un capteur et un élément de visée, apte à assurer le bon positionnement du capteur en regard du susdit indicateur de manière à ce que ledit capteur puisse lire l'information de l'indicateur à travers l'élément de visée (D1') ; l'élément de visée (D1') et le capteur étant assemblable/fixable l'un à l'autre et l'ensemble capteur/élément de visée étant fixé sur le compteur (C3).

La présente invention se rapporte également au procédé d'acquisition de données de mesures.

## Description

La présente invention se rapporte au domaine des dispositifs et systèmes destinés à lire et à enregistrer de manière automatique au moins une mesure réalisée par un compteur. Elle s'applique en particulier, mais non exclusivement, à un système de positionnement et de fixation du dispositif d'acquisition d'une mesure réalisée par un compteur d'électricité, de gaz ou d'eau.

Traditionnellement, la lecture et l'enregistrement de données de consommation nécessitent soit l'installation d'un appareil spécifique mesurant directement les grandeurs physiques recherchées, soit l'établissement d'un lien de communication entre un compteur en place, possédant des moyens de transmettre les informations de mesure, et un enregistreur capable de recevoir et stocker lesdites informations.

Ainsi, l'art antérieur connaît déjà le brevet américain US 6195018 qui décrit un système pour faire le relevé d'une pluralité de compteurs et un système de collecte avec une pluralité de collecteurs. Chaque compteur mesure périodiquement un paramètre tel que la consommation d'électricité et mémorise l'information obtenue. Chaque compteur transmet périodiquement l'information enregistrée à un collecteur par un signal radio. Quand un collecteur reçoit une transmission, il détermine le compteur d'origine et extrait ensuite l'information de mesure brute. Le collecteur traite ensuite l'information de mesure pour produire une fonction mesurée, comme par exemple une courbe de charge, une courbe des périodes d'utilisation ou une courbe de la demande. Le collecteur peut compenser les transmissions manquantes et les pannes de courant. Les fonctions mesurées pour chaque compteur sont transmises des collecteurs vers une centrale de surveillance.

Les inconvénients d'une telle solution s'appuyant sur un lien de communication depuis un compteur en place sont la rareté des compteurs possédant cette caractéristique.
Le brevet WO9015971A1 décrit une autre solution de capteur optoélectronique destiné à être placé dans un compteur de consommation d'énergie domestique qui comprend un organe rotatif dont la vitesse de rotation est fonction de la consommation. Le capteur est logé dans un support comprenant des moyens permettant sa fixation par pincement élastique à une partie existant à l'intérieur du compteur, lesdits moyens maintenant le capteur à une distance fixe de l'organe rotatif du compteur. Utilisation notamment dans les compteurs de consommation d'électricité.

L'art antérieur connaît également les brevets US 4678907 et US 5113130 qui s'appliquent aux compteurs électriques, qui décrivent des systèmes de lecture optique qui servent respectivement à mesurer la consommation d'énergie en comptabilisant le nombre d'impulsions lumineuses et à tester le fonctionnement ou non du compteur électrique.

Enfin, l'art antérieur comprend également la demande de brevet anglais GB 2172399 qui décrit un dispositif pour convertir le mouvement d'un compteur électromécanique en données numériques et le brevet français FR2614098B1 décrivant un dispositif adaptable à différents compteurs pour supporter un capteur optique. Ce dernier brevet décrit un dispositif comportant deux flasques parallèles fixées aux extrémités de tiges cylindriques et portant une lame flexible munie de deux pointes permettant d'exercer une pression sur les faces du compteur.

Le problème de ces solutions résident toujours dans le fait qu'elles nécessitent un spécialiste, ou une personne qualifiée, pour monter/fixer le dispositif d'acquisition de mesures réalisées par un compteur. Grâce à la présente invention, un utilisateur non qualifié pourra de manière à la fois simple d'utilisation, efficace et sûre, positionner le dispositif d'acquisition de mesures, ceci ayant pour principal avantage de réduire notablement les coûts d'exploitation de ce type de systèmes.

La solution de la présente invention permet en effet de réaliser l'opération de fixation du capteur grâce à un matériel simple et diminue donc d'autant à la fois les coûts de fabrication du dispositif mais également les coûts relatifs à la pose dudit dispositif.

Par ailleurs, les particuliers sont souvent réticents face à l'éventuelle intrusion d'un intervenant extérieur, même spécialisé, pour le montage de cet appareil lorsque le compteur se trouve à l'intérieur du logement ou sur la propriété dudit particulier. L'invention permet désormais de ne plus nécessiter la visite d'un expert ou spécialiste extérieur.

Enfin, certains dispositifs de l'art antérieur nécessitent l'indisponibilité temporaire de certaines commodités pendant le temps d'installation du dispositif, comme l'électricité dans le cas d'un compteur d'électricité ou la distribution d'eau dans le cas d'un compteur à eau. À nouveau, grâce au dispositif de l'invention, il n'est plus nécessaire par exemple de couper le disjoncteur pour mettre en place le dispositif d'acquisition sur le compteur électrique.

La présente invention entend remédier aux inconvénients de l'art antérieur en proposant un dispositif d'acquisition disposant d'un moyen simple et peu coûteux pour assurer le bon positionnement d'un capteur destiné à acquérir des données de consommation mesurées par un compteur.

Pour ce faire, la présente invention concerne un dispositif d'acquisition de mesures réalisées par un compteur disposant d'un indicateur de données d'information, par exemple relatives à la consommation mesurée par le compteur, comportant un boîtier, un moyen de détection, un moyen de stockage de données, une unité de traitement, caractérisé en ce qu'il comprend au moins un capteur et un élément de visée, apte à assurer le bon positionnement du capteur en regard du susdit indicateur de manière à ce que ledit capteur puisse lire l'information de l'indicateur à travers l'élément de visée ; l'élément de visée et le capteur étant assemblable/fixable l'un à l'autre et l'ensemble capteur/élément de visée étant fixé sur le compteur.

Dans la suite, on utilisera indifféremment le terme « capteur » pour désigner le support sur lequel est placé le capteur ainsi que le capteur ou le capteur lui-même.

De préférence, l'élément de visée comprendra au moins un orifice.

Selon un mode d'exécution, l'élément de visée pourra consister en une plaque en matière plastique transparente comportant une mire, par exemple constituée de deux traits perpendiculaires, ou un cercle, disposés sur chacune des faces parallèles dudit élément de visée.

Avantageusement, la fixation entre l'élément de visée et le capteur sera réalisée par clipsage, par exemple à l'aide d'au moins deux moins ergots flexibles sensiblement en forme de L présents sur le capteur destinés à se clipser sur les côtés du capteur.

Avantageusement, l'indicateur du compteur pourra consister en une diode métrologique, un rouleau de chiffres d'un afficheur à rouleaux ou un disque métrologique sur lequel figure un repère de couleur différente.

De préférence, le capteur sera un capteur optique, par exemple une photodiode ou tout capteur sensible à la lumière/luminescence ou encore un capteur infrarouge. Dans le cas d'un capteur infrarouge, le capteur envoie un rayon infrarouge dont la réflexion sur le disque est analysée pour déterminer si le rayon a atteint la marque noire habituellement présente sur le disque ou une autre partie non marquée dudit disque.

Avantageusement, le dispositif selon l'invention comprendra un bus de connexion pour le transfert des données stockées dans le susdit moyen de stockage.

De même, ce dispositif pourra comprendre un convertisseur analogique-numérique ou un comparateur relié d'une part au capteur et d'autre part à l'unité de traitement.

Avantageusement, le dispositif de l'invention comprendra un moyen d'alimentation propre en énergie électrique.

De même, il pourra comprendre un moyen d'horodatage pour l'horodatage des acquisitions des mesures.

De même, il pourra comprendre un moyen de compression des données d'horodatage.

La présente invention se rapporte également à un procédé pour l'acquisition de mesures réalisées par un compteur, grâce à un dispositif tel que décrit ci-dessus, caractérisé en ce qu'il comprend les étapes suivantes :
- acquisition par le capteur de données affichées par l'indicateur du compteur,
- traitement desdites données en vue de déterminer et d'identifier des mesures du compteur,
- stockage des mesures obtenues dans un moyen de mémorisation.

Avantageusement, l'étape de traitement des données pourra comprendre une première étape de conversion de la lumière ambiante en un signal électrique dit « signal brut » et une deuxième étape de détection d'un événement spécifique caractéristique, tels que par exemple la détection par le capteur d'une marque noire présente sur la roue d'un compteur électromécanique.

Avantageusement, le procédé de l'invention comprendra en outre une étape d'horodatage des événements relatifs aux mesures acquises.

De préférence, le procédé comprendra également une étape de compression des données d'horodatage des mesures acquises consistant en une conversion de la date de l'événement en une durée depuis l'événement précédent.

De même, le procédé comprendra une étape complémentaire de transfert des mesures acquises dans une unité de stockage/traitement externe, tels que par exemple un ordinateur personnel.

On comprendra mieux l'invention à l'aide de la description, faite ci-après à titre purement explicatif, d'un mode de réalisation de l'invention, en référence aux figures annexées :
- la figure 1 illustre une vue schématique représentant un compteur doté d'une diode métrologique et représentant le positionnement de l'élément de visée du dispositif selon l'invention ;
- la figure 2 illustre une vue schématique représentant un compteur doté d'un afficheur à rouleaux et représentant le positionnement de l'élément de visée du dispositif selon l'invention ;
- la figure 3 illustre une vue schématique représentant un compteur doté d'un disque métrologique et représentant le positionnement de l'élément de visée du dispositif selon l'invention ;
- la figure 4 illustre une vue schématique du positionnement du capteur du dispositif selon l'invention ;
- la figure 5 illustre un schéma d'une mise en oeuvre complète du dispositif selon l'invention ; et
- la figure 6 illustre une vue schématique d'un moyen de fixation du capteur du dispositif sur l'élément de visée du dispositif ;
- la figure 7 illustre une vue schématique d'un capteur selon l'invention ; et
- la figure 8 illustre une vue schématique d'une variante de réalisation de l'élément de visée.

En préalable, il est important de noter que le dispositif selon l'invention peut être utilisé avec tous types de compteurs comportant un indicateur de la consommation mesurée, notamment lorsque cet indicateur se présente sous la forme d'un afficheur à rouleaux, d'un disque en rotation, d'une diode générant des impulsions lumineuses, ou sous tout autre forme permettant une acquisition par un moyen optique.

Par ailleurs, le dispositif selon l'invention comprend également un boîtier, un moyen de détection, un moyen de stockage de données, une unité de traitement, qui ne sont pas présentés ici ni discutés car ils ne forment pas l'objet essentiel de l'invention et sont bien connus de l'homme du métier.

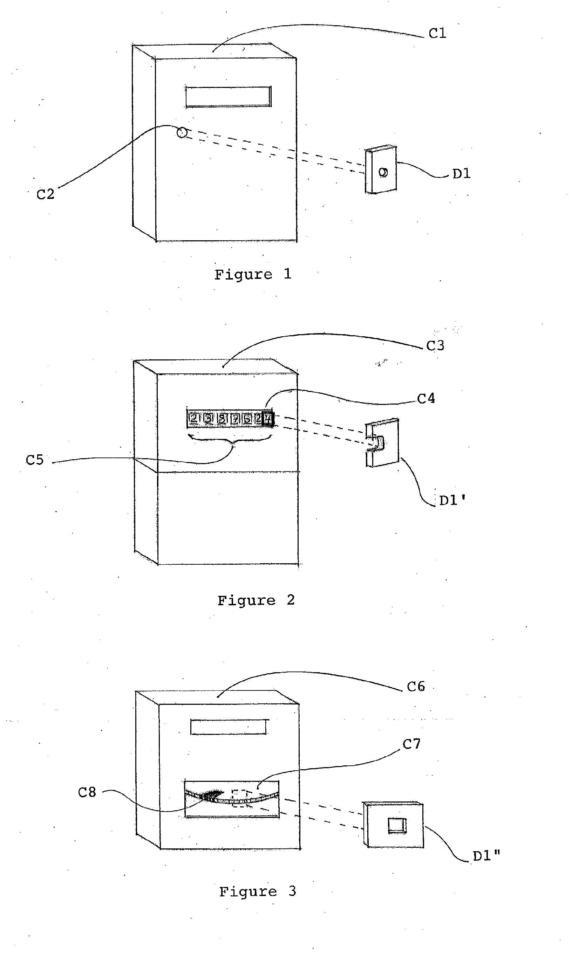

Un indicateur de la consommation mesurée peut être une diode métrologique C2 présente sur un compteur C1 représenté sur la figure 1. Ce compteur C1 est par exemple un compteur électronique de la consommation électrique. La diode C2 produit des impulsions lumineuses dont la fréquence est proportionnelle à la consommation mesurée.

Dans le mode de réalisation représenté sur la figure 1, l'élément de visée D1 du dispositif selon l'invention se présente sous la forme d'une plaque rectangulaire comportant un orifice en son centre. Lorsque l'élément D1 est approché de la face avant du compteur C1 pour y être fixé, la diode C2 peut être vue à travers l'orifice, ce qui permet de positionner l'élément D1 en s'assurant que la diode et l'orifice sont bien dans le même axe.

Un indicateur de la consommation mesurée peut être un rouleau de chiffres C4 d'un afficheur à rouleaux C5 présent sur un compteur C3 représenté sur la figure 2. Ce compteur C3 est par exemple un compteur de gaz ou un compteur d'eau. La lecture d'un seul rouleau de chiffres est suffisante pour obtenir un enregistrement de l'évolution de la grandeur mesurée. Le rouleau C4 servant à la lecture par le capteur est préférentiellement celui le plus à droite, de façon à obtenir la meilleure précision. On pourra également prévoir que le capteur suive le défilement des deux derniers rouleaux ou bien l'utilisation de deux capteurs destinés respectivement à la lecture de ces deux derniers rouleaux. Une autre possibilité consiste évidemment à placer un capteur en face de chaque rouleau ou à utiliser un capteur apte à suivre le défilement de l'ensemble des rouleaux, mais cette solution nécessite une structure plus complexe et donc plus onéreuse.

Dans le mode de réalisation représenté sur la figure 2, l'élément de visée D1' du dispositif selon l'invention se présente sous la forme d'une plaque rectangulaire comportant une encoche découpée sur toute l'épaisseur de la plaque. Lorsque l'élément D1' est approché de la face avant du compteur C3 pour y être fixé, le rouleau de chiffres C4 peut-être vu par cette encoche, ce qui permet de positionner l'élément D1' en s'assurant que le rouleau et l'encoche sont bien dans le même axe. Un avantage secondaire de ce mode de réalisation est qu'il est possible de lire le chiffre affiché sur le rouleau de chiffres par l'ouverture pratiquée par l'encoche sur la tranche de l'élément D1', même après que le dispositif complet a été fixé. Si cet avantage secondaire doit effectivement être mis en oeuvre, il faut s'assurer d'une épaisseur suffisante de l'élément D1'.

Un indicateur de la consommation mesurée peut être un disque en rotation C7 d'un compteur C6 représenté sur la figure 3. Ce compteur C6 est par exemple un compteur électromécanique d'électricité. Le disque C7 porte une marque C8 de couleur différente, généralement noire, permettant de compter le nombre de tours. La fréquence des tours de disque est proportionnelle à la consommation mesurée.

Dans le mode représenté sur la figure 3, l'élément de visée D1'' du dispositif selon l'invention se présente sous la forme d'une plaque rectangulaire comportant un orifice en son centre. Lorsque l'élément D1'' est approché de la face avant du compteur C6 pour y être fixé, la tranche du disque C7 peut être vue à travers l'orifice, ce qui permet de positionner l'élément D1'' en s'assurant que l'axe géométrique orthogonal à la plaque D1'' et passant par le centre de l'orifice se trouve bien dans le plan géométrique du disque C7.

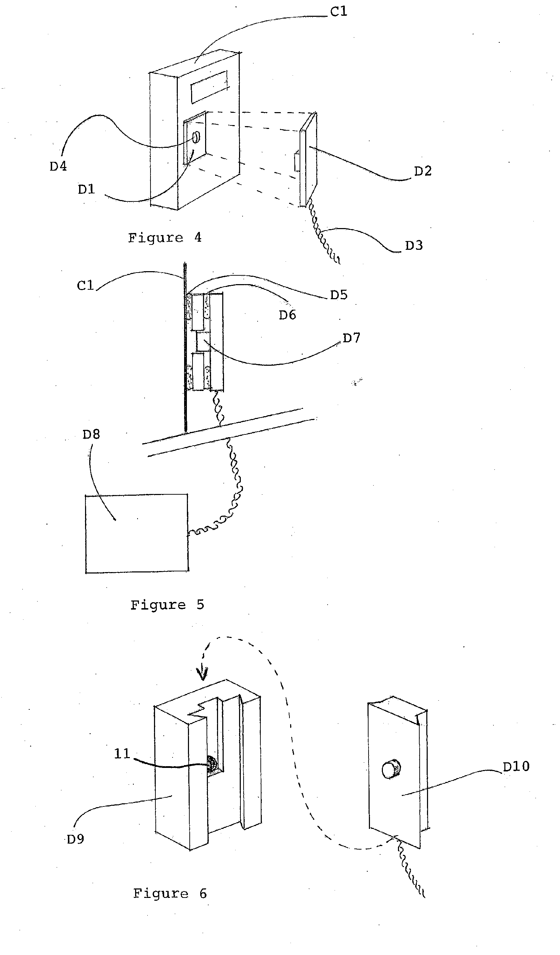

Dans le mode de réalisation représenté sur la figure 4, le capteur D2 du dispositif selon l'invention se présente sous la forme d'une plaque rectangulaire sur laquelle se trouve un ou plusieurs composants électroniques, dont le capteur optique. Le capteur D2 vient se positionner sur l'élément de visée D1, qui est déjà fixé sur la face avant du compteur.

Dans le mode de réalisation représenté sur la figure 5, l'élément de visée est fixé sur la face avant du compteur par une pâte adhésive D5, permettant de le repositionner et de le déposer facilement, et le capteur est fixé sur l'élément de visée par l'action conjointe de l'adhésif D6 et de l'encastrement dans l'orifice D4 d'une excroissance composée en tout ou partie du capteur optique D7. Bien entendu, en lieu et place de la pâte adhésive D5 choisi ici pour illustrer l'invention, on pourra envisager tout autre moyen de fixation adapté pour fixer un élément réalisé en matière plastique contre la vitre transparente généralement présente sur la face d'un compteur, d'eau ou d'électricité.

Dans le mode de réalisation représenté sur la figure 5, le capteur est avantageusement relié par un cordon de raccordement D3 à un autre support D8, pouvant être un boîtier en plastique, comprenant une horloge, une unité de traitement et une unité de stockage, non représenté sur les figures annexées.

Dans un mode de réalisation non représenté, le capteur pourra comprendre un capteur constitué d'une cible électronique photosensible, une lentille objectif et une diode émettrice. La cible est activée à intervalles de temps réguliers pendant une très courte durée, de manière à minimiser la consommation électrique du dispositif. La cible saisit l'image visible à travers la lentille objectif et éclairée par la diode émettrice. Dans le cas d'un indicateur sous forme d'un rouleau de chiffres, la fréquence d'activation de la cible est choisie élevée en comparaison de la vitesse de rotation du rouleau. Ainsi chaque chiffre qui défile devant la cible apparaît en entier sur au moins une image saisie et l'évolution de la consommation mesurée peut être reconstituée.

Avantageusement, l'unité de traitement détecte les images où apparaît en entier un chiffre et ne transmet que celles-ci à l'unité de stockage. L'unité de stockage conserve la série des images des chiffres entiers avec leurs dates d'acquisition respectives. Dans un autre mode de réalisation, également non représenté, l'unité de traitement détecte les images où apparaît en entier un chiffre et ne fait que signaler l'occurrence de ces événements, c'est-à-dire l'apparition d'un chiffre entier, à l'unité de stockage. L'unité de stockage stocke alors uniquement les dates de détection correspondantes.

Dans un autre mode de réalisation, l'unité de traitement est avantageusement capable de reconnaître les chiffres apparaissant en entier sur les images saisies et ne transmet à l'unité de stockage que les codes numériques des chiffres en question.

Dans le mode de réalisation de la figure 6, le positionnement et la fixation du capteur D10 sur l'élément de visée D9 se font par un mécanisme de queue d'aronde et de butée. L'élément de visée D9 est évidé selon une première rainure, présentant une section de forme sensiblement trapézoïdale, réalisée jusqu'à la surface et dont les bords s'écartent dans la profondeur de la plaque. Au fond de cette première rainure est creusée une seconde rainure, par exemple de section de forme rectangulaire, de largeur inférieure à celle de la première rainure et qui s'étend, dans le sens de la longueur, du bord jusqu'au centre de la plaque. Au fond de cette rainure, du côté qui se trouve au centre de la plaque, se trouve un orifice 11. Le capteur D10 est usiné de manière à pouvoir être enfilé dans la susdite première rainure de l'élément de visée D9. L'excroissance présente sur la surface du capteur D10 et composé en tout ou partie du capteur D10, se glisse dans la seconde rainure, de section de forme rectangulaire, et vient naturellement se positionner en butée, en face de l'orifice.

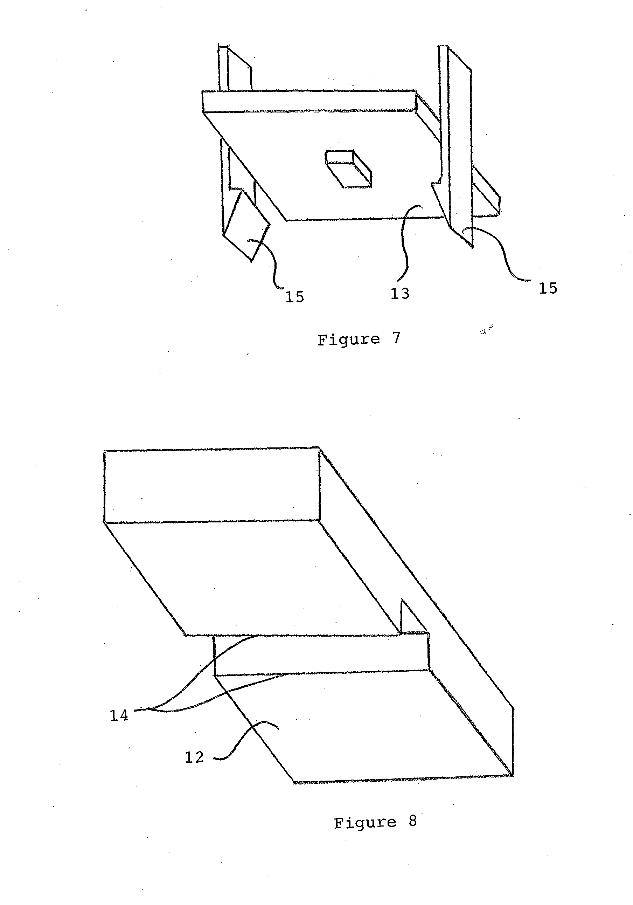

Les figures 7 et 8 illustrent une variante de réalisation à la fois du capteur 13 et de l'élément de visée 12; les deux éléments 13, 12 étant assemblés l'un à l'autre et fixés sur le compteur, non représenté sur les figures 7 et 8. Ces deux figures s'appliquent plus particulièrement, mais non exclusivement, à une utilisation du dispositif selon l'invention sur un compteur électrique.

L'élément de visée 12 peut être constitué d'une plaque transparente sur laquelle figure une mire, non représenté sur ces figures, sous la forme de deux lignes, chacune étant tracée sur une des faces de la plaque transparente. L'alignement de ces deux lignes et de la tranche du disque métrologique garantit le bon positionnement du viseur, donc du dispositif dans son ensemble.

Dans certains cas, il peut être intéressant de fixer le capteur 13 sur l'élément de visée 12 avant la pose de façon à garantir un positionnement irréprochable. Le positionnement de l'ensemble sur le compteur reste alors possible grâce à la mire qui dépasse de chaque côté du capteur, à condition bien sûr d'avoir prévu un élément de visée 12 plus large que le capteur.

D'autres versions de la mire peuvent être d'autres types de marques figurant sur chaque face et devant être alignées avec la tranche du disque : deux lignes parallèles sur chaque face, la tranche du disque devant apparaître dans l'espace entre chaque paire de lignes, des croix ou des cercles figurant sur chaque face etc....

Comme représenté sur la figure 7, deux ergots flexibles 15 sont présents de part et d'autre du capteur 13 et viennent s'encastrer ou s'enclipser dans les encoches réalisées dans l'élément de visée 12.
Les encoches 14 de l'élément de visée 12 peuvent être en fait qu'une seule encoche présentant une longueur équivalente à la largeur de l'élément de visée, comme représenté sur la figure 8.
Les deux ergots 15 peuvent dépasser de part et d'autre du plan de l'élément de visée 12 de façon à ce que ces parties protubérantes des ergots 15, autorisent, par pression par exemple manuelle sensiblement au centre du capteur 13, d'écarter les ergots 15 pour faciliter l'encastrement et « l'extraction » de l'élément de visée 12.

A cet effet, le matériau du capteur 13, c'est-à-dire celui utilisé pour réaliser son support, peut consister en une matière relativement souple autorisant une flexion relative dudit élément 13 de sorte que les points en L, ou demi-flèche, des ergots 15 s'écartent facilement. Par ailleurs, les ergots 15 peuvent également être réalisés en matière relativement souple autorisant l'écartement des points destinées à la fixation sur l'élément de visée 12 sans endommager lesdits ergots 15.

Les ergots 15 peuvent donc être solidaires du capteur 13, le matériau utilisé permettant le minimum de souplesse requis pour écarter légèrement les ergots 15. Les deux ergots 15 peuvent également être reliés par un « pont » solidaire, ou organe de liaison, qui est fixé sur la plaque support 13 portant le capteur 13. Dans ce cas, c'est le pont qui est fixé à la plaque 13. Par ailleurs, les ergots 15 pourront être métalliques avec un système de ressort, à l'identique des fixations de mémoires RAM dans les ordinateurs portables.

Les étapes relatives au traitement des mesures recueillies par le capteur s'énoncent comme suit :
Etape 1 : Conversion de la lumière ambiante en signal électrique dit « signal brut »,
Etape 2 : Détection d'événements spécifiques dans le signal, c'est-à-dire des pics dus à l'allumage de la diode des compteurs électroniques, pics dus à la variation de réflexion du faisceau infrarouge lors de passage de la marque noire, c'est-à-dire la marque figurant sur les disques des compteurs électromécaniques,
Etape 3 : Compression : conversion de la date d'un événement en une durée depuis l'événement précédent. Cette durée peut être codée et mémorisée sur un nombre de bits limité, par exemple sur seulement un octet. Dans ce cas, Les valeurs possibles vont donc de 0 à 255, mais les dernières valeurs sont réservées pour représenter des codes spéciaux. Lorsque la durée depuis le dernier événement dépasse la valeur maximale (hors codes spéciaux), c'est un code spécial qui est mémorisé et le compteur de durée est remis à zéro.

À titre d'exemple illustratif de l'étape de compression, on peut considérer la série d'événement suivants : ev1, ev2, ev3, ev4.
Les dates, en secondes, sont par exemple : t1=134500, t2=134560, t3=135105, t4=135300.
La compression consiste alors à transformer la série en : d2=t2-t1=60, d3.1=251, d3.2=251, d3.3=45, d4=195.

La valeur 251 est un code spécial qui signifie qu'il n'y a eu aucun événement pendant 250 secondes. On retrouve donc bien par exemple la date t3 à partir de la date t2, en additionnant 545=250+250+45.
Grâce à ce principe de compression dans lequel on indexe les dates ultérieures en fonction de références et/ou des dates antérieures, les données horaires relatives aux instants où les mesures sont relevées par le dispositif selon l'invention peuvent être stockées en minimisant les ressources de mémoire nécessaires.

De la même manière, l'étape de détection d'événements spécifiques dans le signal est spécifique dans le cas d'un compteur électromécanique. Le mécanisme de détection (détection d'une « impulsion » apparaissant lors du passage de la marque noire, cette impulsion ayant l'apparence d'une « bosse » dans le signal) est caractérisé par l'observation dans le signal d'une succession de phases dont la première est une pente continûment montante dont la hauteur est supérieure à un seuil, par exemple adaptatif et dépendant des impulsions valides détectées dans un passé proche, dont la seconde est un plateau durant lequel le signal reste dans un intervalle dont l'écart est limité et peut dépendre de la hauteur de la pente immédiatement antérieure et dont la troisième est une pente continûment descendante dont la hauteur est supérieure à un seuil, par exemple adaptatif et dépendant des impulsions valides détectées dans un passé proche.

L'invention est décrite dans ce qui précède à titre d'exemple. Il est entendu que l'homme du métier est à même de réaliser différentes variantes de l'invention sans pour autant sortir du cadre du brevet.

## Revendications

1. Dispositif d'acquisition de mesures réalisées par un compteur (C1, C3, C6) **caractérisé en ce qu'**il comporte deux éléments destinés à être positionnés de manière superposée sur ledit compteur, le premier élément (D1) étant muni d'un viseur pour la vérification du positionnement en regard d'un indicateur dudit compteur, et le second élément (D2) comportant un capteur pour la lecture de l'état dudit indicateur, l'assemblage du premier et du deuxième élément assurant le positionnement du capteur en regard de l'indicateur.

2. Dispositif d'acquisition selon la revendication 1, **caractérisé en ce que** l'élément de visée (D1, D1', D1'', D9, 12) comprend au moins un orifice.

3. Dispositif d'acquisition selon la revendication 2, **caractérisé en ce que** l'élément de visée (D1, D1', D1'', D9, 12) comprend au moins un orifice dont la section correspond à l'un au moins des indicateurs constitués par une diode métrologique (C2), un rouleau de chiffres (C4), un afficheur à rouleaux (C5) ou un disque métrologique (C8).

4. Dispositif d'acquisition selon la revendication 1, **caractérisé en ce que** le deuxième élément comprend une cellule photosensible, une lentille objectif et une diode émettrice et **en ce qu'**il comporte en outre un boîtier comprenant une horloge, une unité de traitement et une unité de mémoire.

5. Dispositif d'acquisition selon la revendication 4, **caractérisé en ce que** la cellule photosensible est activée périodiquement de manière impulsionnelle.

6. Dispositif d'acquisition selon la revendication 4, **caractérisé en ce que** l'unité de traitement détecte parmi les images acquises par la cellule celles correspondant à un chiffre visible en entier, et les transmet à l'unité de mémoire pour un enregistrement horodaté par ladite horloge.

7. Dispositif d'acquisition selon la revendication 4, **caractérisé en ce que** l'unité de traitement détecte parmi les images acquises par la cellule celles correspondant à un chiffre visible en entier, et procède à l'enregistrement horodaté par ladite horloge de l'instant de détection.

8. Dispositif d'acquisition selon l'une quelconque des revendications précédentes, **caractérisé en ce que** le premier élément présente une surface adhésive repositionnable.

9. Dispositif d'acquisition selon l'une quelconque des revendications précédentes, **caractérisé en ce que** le premier élément coopère avec le second élément par encastrement et par collage.

10. Dispositif d'acquisition selon l'une quelconque des revendications précédentes, **caractérisé en ce que** le premier élément coopère avec le second élément par un mécanisme de queue d'aronde et de butée.

11. Dispositif d'acquisition de mesures réalisées par un compteur (C1, C3, C6) disposant d'un indicateur de données d'information, par exemple relatives à la consommation mesurée par le compteur (C1, C3, C6), selon la revendication 1 **caractérisé en ce qu'**il comporte un boîtier, un moyen de détection, un moyen de stockage de données, une unité de traitement, **caractérisé en ce qu'**il comprend au moins un capteur (D2, D7, D10, 13) et un élément de visée, apte à assurer le bon positionnement du capteur (D2, D7, D10, 13) en regard du susdit indicateur de manière à ce que ledit capteur (D2, D7, D10, 13) puisse lire l'information de l'indicateur à travers l'élément de visée (D1, D1', D1'', D9, 12) ; l'élément de visée (D1, D1', D1'', D9, 12) et le capteur (D2, D7, D10, 13) étant assemblable/fixable l'un à l'autre et l'ensemble capteur/élément de visée étant fixé sur le compteur (C1, C3, C6).

12. Dispositif d'acquisition selon la revendication 11, **caractérisé en ce que** l'élément de visée (D1, D1', D1'', D9, 12) consiste en une plaque en matière plastique transparente comportant une mire, par exemple constituée de deux traits perpendiculaires, ou un cercle, disposés sur chacune des faces parallèles dudit élément de visée (D1, D1', D1'', D9, 12).

13. Dispositif d'acquisition selon l'une des revendications précédentes, **caractérisé en ce que** la fixation entre l'élément de visée (D1, D1', D1'', D9, 12) et le capteur (D2, D7, D10, 13) est réalisée par clipsage, par exemple à l'aide d'au moins deux ergots (15) flexibles sensiblement en forme de L présents sur le capteur (D2, D7, D10, 13) destinés à se clipser sur les côtés de l'élément de visée (D1, D1', D1'', D9, 12).

14. Dispositif d'acquisition selon l'une quelconque des revendications 1 à 4, **caractérisé en ce que** l'indicateur du compteur (C1, C3, C6) consiste en une diode métrologique, un rouleau de chiffres d'un afficheur à rouleaux ou un disque métrologique sur lequel figure un repère de couleur différente.

15. Dispositif d'acquisition selon l'une quelconque des revendications 11 à 14, **caractérisé en ce que** le capteur (D2, D7, D10, 13) est un capteur optique, par exemple une photodiode ou tout capteur sensible à la lumière/luminescence ou encore un capteur infrarouge.

16. Dispositif d'acquisition selon l'une des revendications précédentes, **caractérisé en ce qu'**il comprend un bus de connexion pour le transfert des données stockées dans le susdit moyen de stockage.

17. Dispositif d'acquisition selon la revendication 11, **caractérisé en ce qu'**il comprend un convertisseur analogique-numérique ou un comparateur relié d'une part au capteur (D2, D7, D10, 13) et d'autre part à l'unité de traitement.

18. Dispositif d'acquisition selon la revendication 11, **caractérisé en ce qu'**il comprend un moyen d'alimentation propre en énergie électrique.

19. Dispositif d'acquisition selon l'une des revendications précédentes, **caractérisé en ce qu'**il comprend un moyen d'horodatage pour l'horodatage des acquisitions des mesures.

20. Dispositif d'acquisition selon la revendication 19, **caractérisé en ce qu'**il comprend un moyen de compression des données d'horodatage.

21. Dispositif d'acquisition selon l'une quelconque des revendications précédentes, **caractérisé en ce que** l'unité de traitement détecte les images où apparaît en entier un chiffre et ne transmet que celles-ci à l'unité de stockage ou ne transmet que l'occurrence de l'apparition d'un chiffre entier.

22. Procédé pour l'acquisition de mesures réalisées par un compteur (C1, C3, C6), grâce à un dispositif selon l'une des revendications 1 à 12, **caractérisé en ce qu'**il comprend les étapes suivantes :
- acquisition par le capteur (D2, D7, D10, 13) de données affichées par l'indicateur du compteur (C1, C3, C6),
- traitement desdites données en vue de déterminer et d'identifier des mesures du compteur (C1, C3, C6),
- stockage des mesures obtenues dans un moyen de mémorisation.

23. Procédé pour l'acquisition selon la revendication 22, **caractérisé en ce que** l'étape de traitement des données comprend une première étape de conversion de la lumière ambiante en un signal électrique dit « signal brut » et une deuxième étape de détection d'un événement spécifique caractéristique, tels que par exemple la détection par le capteur (D2, D7, D10, 13) d'une marque noire présente sur la roue d'un compteur électromécanique (C6).

24. Procédé pour l'acquisition selon la revendication 22, **caractérisé en ce qu'**il comprend en outre une étape d'horodatage des événements relatifs aux mesures acquises.

25. Procédé pour l'acquisition selon la revendication 24, **caractérisé en ce qu'**il comprend également une étape de compression des données d'horodatage des mesures acquises consistant en une conversion de la date de l'événement en une durée depuis l'événement précédent.

26. Procédé pour l'acquisition selon l'une des revendications 22 à 25, **caractérisé en ce qu'**il comprend une étape complémentaire de transfert des mesures acquises dans une unité de stockage/traitement externe, tels que par exemple un ordinateur personnel.
